# EUROPÄISCHE PATENTSCHRIFT

(11) **EP 3 516 763 B1**
(45) Veröffentlichungstag und Bekanntmachung des Hinweises auf die Patenterteilung: **12.10.2022**
(21) Anmeldenummer: 17772036.4
(22) Anmeldetag: 22.09.2017
(51) Int. Cl.: H02M 7/5387, H02M 1/12

(54) **VERFAHREN ZUM ERZEUGEN EINES WECHSELSTROMS MITTELS EINES WECHSELRICHTERS EINER WINDENERGIEANLAGE**
METHOD FOR GENERATING AN ALTERNATING CURRENT BY MEANS OF AN INVERTER OF A WIND TURBINE
PROCÉDÉ DE PRODUCTION D'UN COURANT ALTERNATIF AU MOYEN D'UN CONVERTISSEUR D'UNE ÉOLIENNE

(30) Priorität: 23.09.2016 DE 102016117964
(43) Veröffentlichungstag der Anmeldung: 31.07.2019
(73) Patentinhaber: Wobben Properties GmbH, 26607 Aurich (DE)
(72) Erfinder: MACKENSEN, Ingo, 26607 Aurich (DE); GERTJEGERDES, Stefan, 26603 Aurich (DE)
(74) Vertreter: Eisenführ Speiser
(86) Internationale Anmeldenummer: PCT/EP2017/074035
(87) Internationale Veröffentlichungsnummer: WO 2018/055089

(56) Entgegenhaltungen:
- EP-A1- 0 456 854
- EP-A1- 0 456 854
- AT-B- 405 586
- CN-A- 101 867 196
- DE-A1- 3 533 277
- DE-A1-102011 084 910
- DE-A1-102014 219 052
- DE-A1-102014 219 052
- JP-A- S6 022 490
- JP-A- S6 022 490
- US-A1- 2011 227 422
- US-A1- 2012 049 835
- US-B1- 6 459 596
- US-B1- 7 053 595
- SAE-SUE S ET AL: "Comparative performance evaluation of fixed and adaptive hysteresis band delta modulation techniques for UPS", POWER ELECTRONICS AND DRIVE SYSTEMS, 1999. PEDS '99. PROCEEDINGS OF TH E IEEE 1999 INTERNATIONAL CONFERENCE ON HONG KONG 27-29 JULY 1999, PISCATAWAY, NJ, USA,IEEE, US, Bd. 2, 27. Juli 1999 (1999-07-27), Seiten 956-960, XP010351959, ISBN: 978-0-7803-5769-3
- SAE-SUE S ET AL: "Comparative performance evaluation of fixed and adaptive hysteresis band delta modulation techniques for UPS", POWER ELECTRONICS AND DRIVE SYSTEMS, 1999. PEDS '99. PROCEEDINGS OF TH E IEEE 1999 INTERNATIONAL CONFERENCE ON HONG KONG 27-29 JULY 1999, PISCATAWAY, NJ, USA,IEEE, US, vol. 2, 27 July 1999 (1999-07-27), pages 956-960, XP010351959, ISBN: 978-0-7803-5769-3
- AMMANN U ET AL: "An analytical approach to steady-state current control properties of power converters featuring discrete-time switching", POWER ELECTRONICS SPECIALISTS CONFERENCE, 2008. PESC 2008. IEEE, IEEE, PISCATAWAY, NJ, USA, 15 June 2008 (2008-06-15), pages 2535-2542, XP031300345, ISBN: 978-1-4244-1667-7

## Beschreibung

Die vorliegende Erfindung betrifft ein Verfahren zum Erzeugen eines elektrischen Wechselstroms mittels eines mehrphasigen Wechselrichters einer Windenergieanlage. Weiterhin betrifft die vorliegende Erfindung ein Verfahren zum Einspeisen eines elektrischen Wechselstroms mittels eines Vollumrichters einer Windenergieanlage. Ferner betrifft die Erfindung auch eine Windenergieanlage, die dazu eingerichtet ist, solche Verfahren durchzuführen.

Es ist besonders für Windenergieanlagen bekannt, elektrischen Wechselstrom mittels elektrischer Wechselrichter zu erzeugen bzw. elektrischen Wechselstrom mittels elektrischer Wechselrichter in das elektrische Versorgungsnetz einzuspeisen.

Hierzu sind die elektrischen Wechselrichter üblicherweise mehrphasig ausgebildet und zumeist in Windenergieanlagen großer Leistung modular ausgeführt, d.h. der Wechselrichter weist eine Vielzahl von Wechselrichtermodulen auf, die gemeinsam den elektrischen Wechselrichter ausbilden.

Ein Verfahren zum Ansteuern solcher Wechselrichter ist das sogenannte Toleranzbandverfahren.

Hierbei wird um eine sinusförmige Funktion, die dem gewünschten Ausgangsstrom des Wechselrichters entspricht, ein Toleranzband gelegt, welches eine untere Bandgrenze und eine obere Bandgrenze aufweist. Zur Durchführung eines stromgesteuerten Toleranzbandverfahrens wird ferner der erzeugte Ausgangsstrom erfasst und mit dem Toleranzband, also der unteren und oberen Bandgrenze, verglichen. Befindet sich der Strom in der positiven Halbwelle und erreicht die untere Bandgrenze, wird ein Schaltimpuls ausgelöst und der entsprechende Schalter des Wechselrichters ändert den Ausgangsstrom. Erreicht der erfasste Ausgangsstrom nun die obere Bandgrenze, wird der Schaltimpuls beendet. Befindet sich der Strom in der negativen Halbwelle und erreicht die obere Bandgrenze, wird ein Schaltimpuls ausgelöst und der entsprechende Schalter des Wechselrichters ändert den Ausgangsstrom. Erreicht der erfasste Ausgangsstrom nun die untere Bandgrenze, wird der Schaltimpuls beendet. Im Ergebnis variiert der Strom innerhalb des Toleranzbandes um den vorgegebenen, idealisierten sinusförmigen Verlauf, wobei die Schalter des Wechselrichters ständig an- und wieder ausgehen, sie weisen dabei eine variable Schaltfrequenz auf, die im Wesentlichen von der Breite des Toleranzbands abhängt.

Durch eine entsprechende Wahl der Breite des Toleranzbandes, also den Abstand zwischen unterer und oberer Bandgrenze, kann die Qualität des erzeugten Wechselstroms verändert werden. Wird das Band schmaler gewählt, variiert der Wechselstrom entsprechend weniger um den idealen Sinusverlauf, wobei hierdurch aber regelmäßig die Schaltfrequenz erhöht wird, da der erzeugte Ausgangstrom durch die engeren Bandgrenzen diese auch schneller erreicht und somit schneller eine Schalthandlung auslöst.

Ferner werden zur Steuerung mehrphasiger Windenergieanlagen-Wechselrichter zumeist Toleranzbänder mit einer Amplitudenabhängigen Statik verwendet, die entsprechend parametriet sind, d.h. die obere und die untere Bandgrenze weisen im laufenden Betrieb einen stromamplitudenabhängigen Abstand zueinander auf. Zudem sind für die Erzeugung des Ausgangsstroms einer jeden Phase jeweils zwei Schalter, insbesondere IGBTs, zuständig, die auch als Ober- bzw. Unterschalter bezeichnet werden. Der Oberschalter erzeugt dabei im Wesentlichen die positive Sinushalbwelle des Ausgangsstromes und der Unterschalter die negative Sinushalbwelle des Ausgangsstromes, wobei die Parametrierung des Wechselrichters dabei so eingestellt ist, dass sich in keiner der entsprechenden Phasen-Sollwerte ein DC-Anteil einstellen sollte.

Durch Bauteiltoleranzen, z.B. Offsets in der Kette der Messglieder, oder parasitäre Effekte, kann es jedoch dazu kommen, dass sich in dem Ausgangsstrom einer oder mehrerer Phasen ein DC-Offset einstellt. Dieser DC-Offset kann unter anderem das Oberschwingungsspektrum am Ausgang des Wechselrichters verschlechtern und ist somit unerwünscht.

Üblicherweise wird hierfür, also zur Erzeugung eines im Wesentlichen DC-Offset-freien Ausgangsstroms, die Bauteiltoleranz entsprechend angepasst, d.h. es werden besonders hohe Anforderungen an die Bauteile gestellt, insbesondere an die der Messerfassung. Dies wiederum führt aber zu sehr kostspieligen Wechselrichterausführungen.

Das Deutsche Patent- und Markenamt hat in der Prioritätsanmeldung zu vorliegender Anmeldung folgenden Stand der Technik recherchiert: DE 102 49 122 A1; DE 10 2014 219 052 A1 und JP H07-308 072 A.

EP 0 456 854 A1 beschreibt ein Verfahren zur Steuerung eines dreiphasigen Pulswechselrichters, bei dem ein dreiphasiges, sinusförmiges Strom-Führungsgrößensystem vorgegeben wird.

Der Artikel von S. Sae-Sue et al.: "Comparative Performance Evaluation of Fixed and Adaptive Hysteresis Band Delta Modulation Techniques for UPS" beschreibt einen einfachen Delta-Modulator mit konstanter Schaltfrequenz und adaptivem Hystereseband. Aufgabe der vorliegenden Erfindung ist es somit, zumindest eines der oben genannten Probleme zu adressieren. Insbesondere soll eine Lösung vorgeschlagen werden, die auf möglichst einfache und effiziente Weise verhindert, dass sich ein DC-Offset am Ausgang des Wechselrichters einstellt, wenigstens soll ein solcher DC-Offset möglichst gering gehalten werden. Insbesondere soll damit das Oberschwingungsspektrum des Ausgangsstromes des Wechselrichters verbessert werden, ohne auf besonders kostspielige Bauteile mit äußerst geringer Bauteiltoleranz zurückzugreifen. Zumindest soll gegenüber bisher bekannten Lösungen eine alternative Lösung vorgeschlagen werden. Erfindungsgemäß wird ein Verfahren nach Anspruch 1 vorgeschlagen. Es wird somit ein Verfahren zum Erzeugen eines mehrphasigen, eine sinusförmige Grundwelle in jeder Phase aufweisenden elektrischen Wechselstroms mittels eines mehrphasigen Wechselrichters einer Windenergieanlage vorgeschlagen, wobei der mehrphasige Wechselrichter mittels eines Toleranzbandverfahrens angesteuert wird, das jeweils eine obere Bandgrenze und eine untere Bandgrenze für jede der Phasen des Wechselrichters aufweist, und wobei der Wechselrichter für jede Phase wenigstens einen Oberschalter zum Erzeugen einer positiven Sinushalbwelle des Wechselstroms der Phase und wenigstens einen Unterschalter zum Erzeugen einer negativen Sinushalbwelle des Wechselstroms der Phase aufweist. Dieses Verfahren umfasst die Schritte Erzeugen der positiven Sinushalbwelle mittels des Oberschalters und Erzeugen der negativen Sinushalbwelle mittels des Unterschalters in Abhängigkeit der Bandgrenzen zu dem elektrischen Wechselstrom der Phase und Verändern wenigstens einer der Bandgrenzen so, dass ein der jeweiligen sinusförmigen Grundwelle überlagerter Signalanteil verringert wird, wobei als der überlagerte Signalanteil ein Gleichstromanteil erfasst wird, das Erfassen des überlagerten Signalanteils durch Erfassen der Schaltfrequenz des Oberschalters und Erfassen der Schaltfrequenz des Unterschalters über eine Halbwelle einer Grundschwingung und durch einen Vergleich der Schaltfrequenzen des Oberschalters und des Unterschalters erfolgt, die obere Bandgrenze oder alternativ die untere Bandgrenze so verändert wird, dass die Differenz der Schaltfrequenz zwischen Oberschalter und Unterschalter minimiert wird, und wobei die obere Bandgrenze oder alternative die untere Bandgrenze mit einer Zeitkonstanten verändert wird, die ein Vielfaches der Dauer der Grundschwingung des elektrischen Wechselstroms der betreffenden Phase ist.

Es kann also somit zunächst ein normales Toleranzbandverfahren mit normal breiten Toleranzbändern verwendet werden. Stellt sich nun beispielsweise ein DC-Offset in einer der Phasen ein bzw. weist die Phase entsprechende Oberschwingung auf, kann dem entgegengewirkt werden, indem eine der Bandgrenzen der entsprechenden Phase verändert wird.

Beispielsweise wird die untere Bandgrenze abgesenkt, wenn der Unterschalter durch eine zu hohe Taktfrequenz ein DC-Offset in der Phase erzeugt.

Es wird somit vorgeschlagen, gezielt einzelne Bandgrenzen so zu verändern, dass ein die Grundwelle überlagernder Signalanteil verringert wird.

Das erfindungsgemäße Verfahren ist somit besonders gut dazu geeignet, die Oberschwingungsemissionen von Wechselrichtern mit Toleranzbandverfahren zu minimieren, insbesondere kann das vorgeschlagene Verfahren als zusätzliches Steuerverfahren für die Toleranzbandgrenzen verwendet werden.

Hierzu wird der Gleichstromanteil erfasst.

Dem Verfahren wird somit ein Erfassen eines Gleichstromanteils zu Grunde gelegt. Dies erfolgt indirekt durch Erfassen der Schaltfrequenzen der Ober- und Unterschalter.

Die Bandgrenzen werden dann in Abhängigkeit eines in der Phase auftretenden Gleichstromanteils eingestellt.

Somit wird über eine Veränderung der oberen bzw. der unteren Bandgrenze die Schaltfrequenz des Ober- bzw. des Unterschalters verändert, insbesondere so eingestellt, dass der Ober- und der Unterschalter möglichst eine gleiche Schaltfrequenz aufweisen.

Das Erfassen des überlagerten Signalanteils erfolgt durch Erfassen der Schaltfrequenz des Oberschalters und Erfassen der Schaltfrequenz des Unterschalters, und weiterhin durch einen Vergleich der Schaltfrequenzen des Oberschalters und des Unterschalters.

Der überlagerte Signalanteil in jeder Phase wird somit über die Schaltfrequenzen des Oberschalters und des Unterschalters erfasst, die besonders Rückschlüsse auf den erzeugten Strom in Bezug auf das Toleranzband, also in Bezug auf die Bandgrenzen ermöglichen.

Dabei werden die so erfassten Schaltfrequenzen des Oberschalters und des Unterschalters miteinander verglichen. Weist dann der Vergleich der beiden Schaltfrequenzen eine Differenz auf, insbesondere eine zu große Differenz, also eine Differenz, die dem Betrage nach über einer vorbestimmten Differenzgrenze liegt, wird wenigstens ein entsprechendes Band so verändert, dass diese Differenz verkleinert bzw. minimiert wird. Beispielsweise wird die obere Bandgrenze nach oben verschoben, wenn der Oberschalter eine schnellere Schaltfrequenz als der Unterschalter aufweist.

Vorzugsweise wird die obere Bandgrenze oder alternativ die untere Bandgrenze so verändert, dass der überlagerte Signalanteil verringert wird, wobei die untere Bandgrenze bzw. die obere Bandgrenze unverändert bleibt.

Um den überlagerten Signalanteil, insbesondere den DC-Offset, zu verringern, wird somit nur eine der beiden Bandgrenzen verändert, insbesondere so, dass sich die Schaltfrequenzen der beiden Schalter angleichen.

Besonders vorteilhaft hierbei ist die vereinfachte Implementierung eines solchen Verfahrens, da hierbei nur eine Bandgrenze verändert wird, kann das erfindungsgemäße Verfahren einfach auf bestehenden Verfahren zur Optimierung aufgeschaltet werden. Vorzugsweise wird die obere Bandgrenze oder alternativ die untere Bandgrenze so verändert, dass die Differenz der Schaltfrequenz zwischen Oberschalter und Unterschalter minimiert wird.

Vorzugsweise wird die obere Bandgrenze oder die untere Bandgrenze so verändert, dass die Schaltfrequenz des Oberschalters bzw. des Unterschalters reduziert wird. Besonders zum Angleichen beider Frequenzen wird hier vorgeschlagen, die höhere Frequenz zu reduzieren, statt die niedrigere zu erhöhen. Es wird somit vorgeschlagen zugunsten des langsamer taktenden IGBTs auszugeregeln. Vorteilhaft hierbei ist insbesondere, dass ein solches Vorgehen zu geringeren thermischen Belastungen führt.

Die obere Bandgrenze oder die untere Bandgrenze wird mit einer Zeitkonstanten verändert, die ein Vielfaches der Dauer der Grundschwingung des elektrischen Wechselstroms der betreffenden Phase ist. Die Veränderung erfolgt also entsprechend langsam.

Die Schaltfrequenzen der Ober- und Unterschalter werden über eine Halbwelle einer Grundschwingung bestimmt. Besonders wird vorgeschlagen, die Anzahl Schalthandlungen über eine Halbwelle aufzunehmen und durch die Dauer der Halbwelle zu teilen.

Vorzugsweise erfolgt das Verändern der Bandgrenzen durch Beaufschlagung der Bandgrenzen mit einem Korrekturwert, insbesondere als variabler Korrekturwert besonders mittels eines PI-Reglers in Abhängigkeit eines DC-Offsets.

Der Betrag der Verschiebung wenigstens einer Bandgrenze kann somit abhängig von dem Betrag des erfassten DC-Offsets gewählt werden, der beispielsweise durch die unterschiedlichen Schaltfrequenzen erfasst wurde. Abhängig von dem erfassten DC-Offset, oder eine andere Abweichung, wird gemäß diesem Vorschlag die jeweilige Bandgrenze mit dem Korrekturwert beaufschlagt. Die Bandgrenze wird somit um diesen Korrekturwert verschoben. Der Korrekturwert kann hierbei als konstanter Korrekturwert aufgeschaltet werden. Vorzugsweise wird er über einen PI-Regler aufgeschaltet. Dafür kann die Abweichung, besonders der DC-Offset, eine Eingangsgröße für den PI-Regler bilden, besonders im Sinne einer Regelabweichung. Der Ausgangswert des Reglers bildet dann den Korrekturwert, der dadurch auch variabel wird, zumindest bis zum Einschwingen auf einen Endwert.

Vorzugsweise weisen die Ober- und Unterschalter jeweils wenigstens einen IGBT auf, um die positive und die negative Sinushalbwelle zu erzeugen.

Die Ober- bzw. Unterschalter werden somit als IGBTs realisiert und weisen insbesondere jeweils eine parallel geschaltete Freilaufdiode auf.

Vorzugsweise verwendet das Toleranzbandverfahren einen Strom-Sollwert und der Wechselrichter wird in Abhängigkeit dieses Strom-Sollwertes gesteuert.

Das Toleranzbandverfahren bzw. der Wechselrichter sind somit stromgesteuert, d.h. insbesondere, dass der am Ausgang des Wechselrichters erzeugte Strom erfasst und zur Regelung des Wechselrichters zurückgeführt wird.

Vorzugsweise erfolgt das Verändern der Bandgrenzen in Abhängigkeit eines bzw. des Strom-Sollwertes.

Die Bandgrenzen werden dabei in Abhängigkeit des Strom-Sollwertes insbesondere so verändert, dass ein der jeweiligen sinusförmigen Grundwelle überlagerter Signalanteil verringert wird.

Vorzugsweise erfolgt ein bzw. das Verändern der Schaltfrequenzen des Oberschalters und des Unterschalters zum Minimieren eines erfassten Gleichstromanteils.

Beispielsweise wird der am Wechselrichterausgang einer entsprechenden Phase auftretende Gleichstromanteil minimiert.

Erfindungsgemäß wird ferner ein Verfahren zum Einspeisen eines elektrischen Stromes in ein elektrisches Versorgungsnetz mit einer Netznennspannung mittels einer an das Versorgungsnetz angeschlossenen Windenergieanlage vorgeschlagen, die wenigstens einen mehrphasigen Wechselrichter aufweist, der als Vollumrichter ausgebildet ist. Dieses Verfahren umfasst den Schritt Einspeisen eines elektrischen Stromes mittels des Vollumrichters, wobei der Vollumrichter ein vorstehend oder nachstehend beschriebenes Verfahren zum Erzeugen eines mehrphasigen, eine sinusförmige Grundwelle in jeder Phase aufweisenden elektrischen Wechselstroms ausführt, bzw. gemäß einer vorstehend oder nachstehend erläuterten Ausführungsform.

Das erfindungsgemäße Verfahren zum Erzeugen eines mehrphasigen, eine sinusförmige Grundwelle in jeder Phase aufweisenden elektrischen Wechselstroms wird somit insbesondere zum Einspeisen eines elektrischen Stromes in ein elektrisches Versorgungsnetz mittels Windenergieanlagen verwendet, besonders mittels einer Windenergieanlage mit Vollumrichterkonzept.

Unter einem Vollumrichterkonzept ist dabei zu verstehen, dass der gesamte von der Windenergieanlage erzeugte Strom über einen Wechselrichter oder eine Anordnung mehrerer Wechselrichter so geführt wird, dass der gesamte in das Versorgungsnetz eingespeiste Strom über diesen Wechselrichter bzw. die Anordnung mehrerer Wechselrichter geführt wurde.

Dabei bietet insbesondere die Kombination aus Vollumrichter und Toleranzbandverfahren während anhaltender Spannungseinbrüche im Versorgungsnetz den Vorteil der direkten Stromvorgabe, sodass das erfindungsgemäße Verfahren besonders gut im Bereich der Low-Voltage-Ride-Through-Verfahren eingesetzt werden kann.

Erfindungsgemäß wird zudem nach Anspruch 11 eine Windenergieanlage vorgeschlagen mit wenigstens einem mehrphasigen Wechselrichter zum Erzeugen eines mehrphasigen, eine sinusförmige Grundwelle in jeder Phase aufweisenden elektrischen Wechselstroms, wobei der Wechselrichter mittels eines Toleranzbandverfahrens angesteuert wird, das jeweils eine obere Bandgrenze und eine untere Bandgrenze für jede der Phasen des Wechselrichters aufweist, und wobei der Wechselrichter für jede Phase wenigstens einen Oberschalter zum Erzeugen einer positiven Sinushalbwelle des Wechselstroms der Phase und wenigstens einen Unterschalter zum Erzeugen einer negativen Sinushalbwelle des Wechselstroms der Phase aufweist, dadurch gekennzeichnet, dass der mehrphasige Wechselrichter dazu eingerichtet ist, ein vorstehend oder nachstehend beschriebenes Verfahren durchzuführen, bzw. ein Verfahren gemäß einer vorstehend oder nachstehend beschriebenen Ausführungsform.

Vorzugsweise weisen die Ober- und Unterschalter jeweils wenigstens einen IGBT auf.

Damit kann auf effiziente Weise ein Toleranzbandverfahren umgesetzt werden und die vorgeschlagene Veränderung wenigstens einer Bandgrenze umgesetzt werden.

Vorzugsweisen weist die Windenergie wenigstens einen PI-Regler auf, um die Bandgrenzen mittels eines Korrekturwertes zu verändern, besonders in Abhängigkeit eines DC-Offsets.

Die vorliegende Erfindung wird nun nachfolgend exemplarisch anhand von Ausführungsbeispielen unter Bezugnahme auf die begleitenden Figuren näher erläutert.
- Fig. 1: zeigt eine schematische Ansicht einer Windenergieanlage gemäß einer Ausführungsform.
- Fig. 2: zeigt einen schematischen Aufbau eines elektrischen Stranges einer Windenergieanlage zum Einspeisen eines elektrischen Wechselstroms gemäß einer Ausführungsform.
- Fig. 3: zeigt schematisch den Aufbau einer Erzeugervorrichtung zum Erzeugen eines elektrischen dreiphasigen Wechselstroms mittels eines Toleranzbandverfahrens gemäß einer Ausführungsform.
- Fig. 4: zeigt eine schematische Struktur eines Teils des Verfahrens nämlich zum Erzeugen eines einphasigen, eine sinusförmige Grundwelle aufweisenden elektrischen Wechselstroms einer Phase gemäß einer Ausführungsform.
- Fig. 5: veranschaulicht einen Verfahrensablauf zum Verändern einer Bandgrenze zum Verringern eines Gleichanteils einer Phase gemäß einer Ausführungsform.

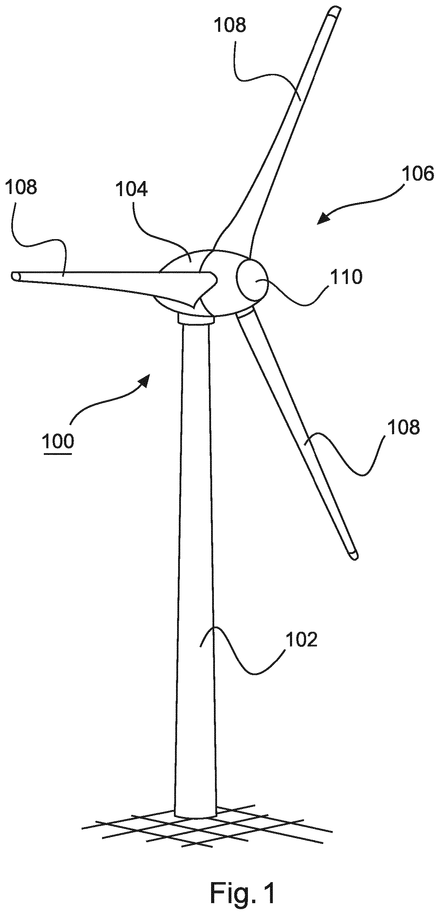

Fig. 1 zeigt eine Windenergieanlage 100 zum Erzeugen eines mehrphasigen, eine sinusförmige Grundwelle in jeder Phase aufweisenden elektrischen Wechselstroms.

Die Windenergieanlage 100 weist hierzu einen Turm 102 und eine Gondel 104 auf. An der Gondel 104 ist ein aerodynamischer Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an, wobei der Generator bevorzugt als 6-phasiger Ringgenerator ausgebildet ist.

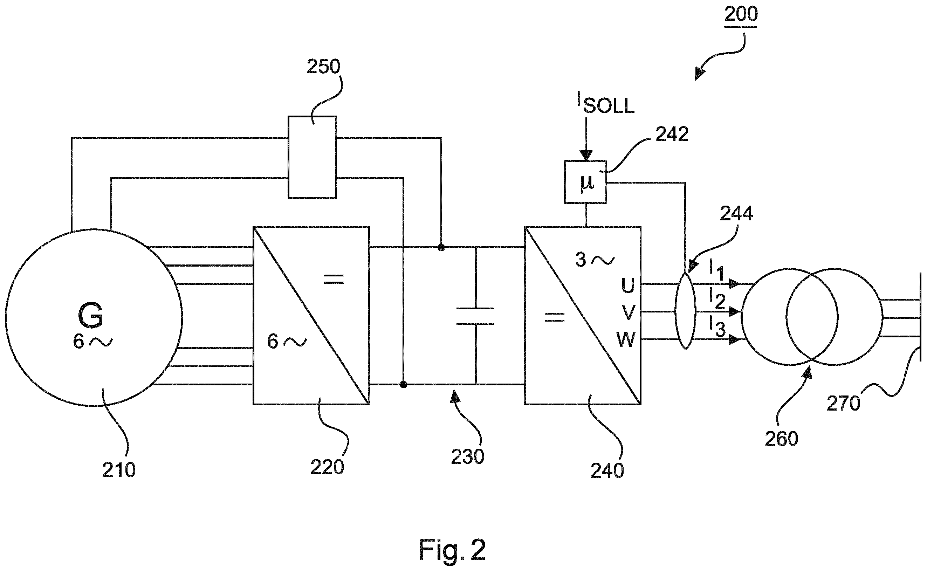

Fig. 2 zeigt vereinfacht einen elektrischen Strang 200 einer in Fig. 1 gezeigten Windenergieanlage.

Der elektrische Strang 200 weist einen 6-phasigen Ringgenerator 210 auf, der durch den Wind über einen mechanischen Antriebsstrang der Windenergieanlage in Drehbewegung versetzt wird, um einen 6-phasigen elektrischen Wechselstrom zu erzeugen. Der 6-phasige elektrische Wechselstrom wird vom Generator 210 an den Gleichrichter 220 übergeben, der über einen Gleichspannungszwischenkreis 230 mit dem 3-phasigen Wechselrichter 240 verschaltet ist. Der 6-phasige Ringgenerator 210, der als Synchrongenerator ausgebildet ist, wird dabei über die Erregung 250 aus dem Gleichspannungszwischenkreis 230 elektrisch erregt.

Der elektrische Strang 200 weist somit ein Vollumrichter-Konzept auf, bei dem mittels des 3-phasigen Wechselrichters 240 über den Windenergieanlagentransformator 260 in das Netz 270 eingespeist wird. Üblicherweise handelt es sich bei diesem Netz 270 um ein Windparknetz, welches über einen Windparktransformator in ein elektrisches Versorgungsnetz einspeist. Es kommt aber auch eine Einspeisung direkt in das elektrische Versorgungsnetz an Stelle des Parknetzes 270 in Betracht.

Zum Erzeugen des dreiphasigen Stromes I1, I2, I3 für jede der Phasen U, V, W wird der Wechselrichter 240 mit einem Toleranzbandverfahren gesteuert. Die Steuerung erfolgt dabei über den Controller 242, der mittels einer Stromerfassung 244 jeden der drei durch den Wechselrichter 240 erzeugten Ströme I1, I2, I3 erfasst. Der Controller ist somit dazu eingerichtet, mittels der Stromerfassung 244 jede Phase des Wechselrichters einzeln zu steuern. Hierzu kann der Controller 242 einen Strom-Sollwert Isoll vorgeben, in Abhängigkeit dessen die Ströme I1, I2, I3 gesteuert werden. Der Strom-Sollwert Isoll wird bevorzugt anlagenintern für jede Phase U, V, W einzeln berechnet und vorgegeben.

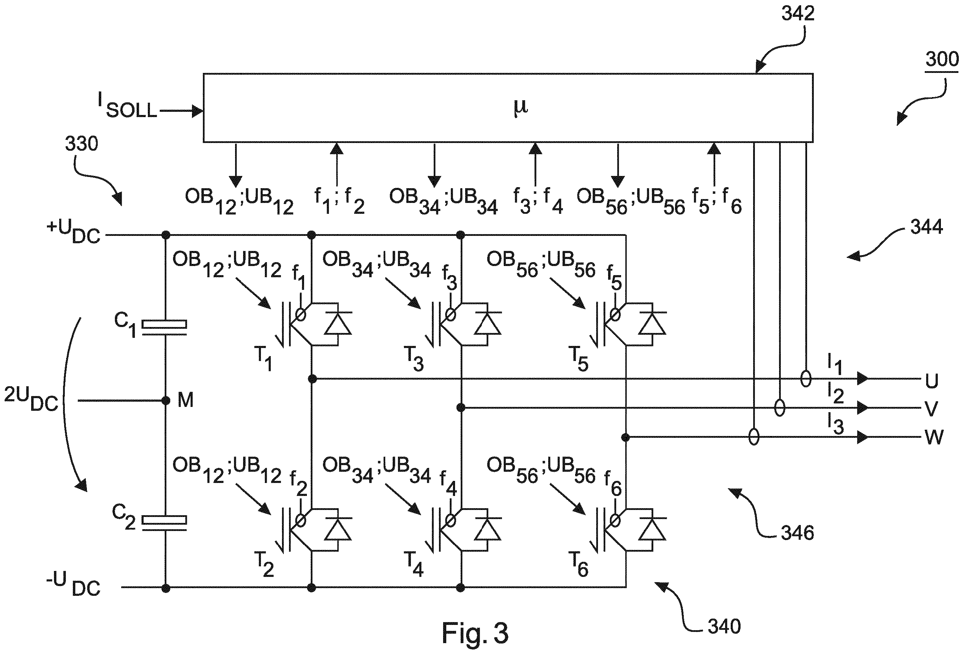

Fig. 3 zeigt schematisch den Aufbau einer Erzeugervorrichtung 300 zum Erzeugen eines elektrischen dreiphasigen Wechselstroms mittels eines Toleranzbandverfahrens. Insbesondere zeigt Fig. 3 dabei einen Teil, der ein Teil des in Fig. 2 gezeigten Wechselrichters sein kann.

Die Erzeugervorrichtung 300 weist einen Gleichspannungszwischenkreis 330 auf, der über einen Gleichrichter mit dem Generator einer Windenergieanlage verbunden ist. Der Gleichspannungszwischenkreis 330 weist ein erstes Potential Udc+ und ein zweites Potential Udc- mit einem Mittenabgriff M auf, der dazu eingerichtet ist, mit einer Filtereinrichtung verschaltet zu werden, um beispielsweise einen am Ausgang 346 des Wechselrichters verschalteten Filter auf den Gleichspannungszwischenkreis 330 zurückzuführen. Zudem ist zwischen dem Mittenabgriff M und den beiden Potentialen Udc+, Udc jeweils ein Kondensator mit der Kapazität C1, C2 angeordnet, um Energie im Gleichspannungszwischenkreis 330 zu speichern und die Gleichspannung 2Udc entsprechend zu glätten.

Der Wechselrichter 340, der mit dem Gleichspannungszwischenkreis 330 verschaltet ist, erzeugt für jede der drei Phasen U, V, W jeweils einen separaten Strom I1, I2, I3 am Ausgang 346 des Wechselrichters 340. Der Wechselrichter 340 weist hierfür für jede der drei Phasen U, V, W jeweils einen Oberschalter T1, T3, T5 und einen Unterschalter T2, T4, T6 auf, wobei die Ober- und Unterschalter T1, T2, T3, T4, T5, T6 insbesondere über den Controller 342 mittels eines Toleranzbandverfahrens angesteuert werden.

Der Controller 342 selbst arbeitet mit einem stromgeführten Toleranzbandverfahren. Hierfür erfasst der Controller 342 die vom Wechselrichter 340 erzeugten Ströme I1, I2, I3 am Ausgang 346 des Wechselrichters 340 mittels einer Stromerfassung 344. Die so erfassten Ströme I1, I2, I3 werden mit einem Soll-Wert Isoll verglichen, um die Bandgrenzen OB12, UB12, OB34, UB34, OB56, UB56 für Ober- und Unterschalter T1, T2, T3, T4, T5, T6 zu bestimmen. Ferner erfasst der Controller 342 die Schaltfrequenzen f1, f2, f3, f4, f5 ,f6 der einzelnen Ober- und Unterschalter T1, T2, T3, T4, T5, T6, um mittels eines Vergleichs zwischen den Frequenzen f1, f3, f5 der entsprechenden Oberschalter T1, T3, T5 und den Frequenzen f2, f4, f6 der entsprechenden Unterschalter T2, T4, T6 jeweils eine entsprechende Bandgrenze OB12, UB12, OB34, UB34, OB56, UB56 so zu verändern, dass die Differenz zwischen den Schaltfrequenzen f1, f2, f3, f4, f5 ,f6 der jeweiligen Oberschalter T1, T3, T5 und der jeweiligen Unterschalter T2, T4, T6 minimiert wird, insbesondere so, dass ein der jeweiligen sinusförmigen Grundwelle überlagerter Signalanteil der jeweiligen Phase U, V, W verringert wird.

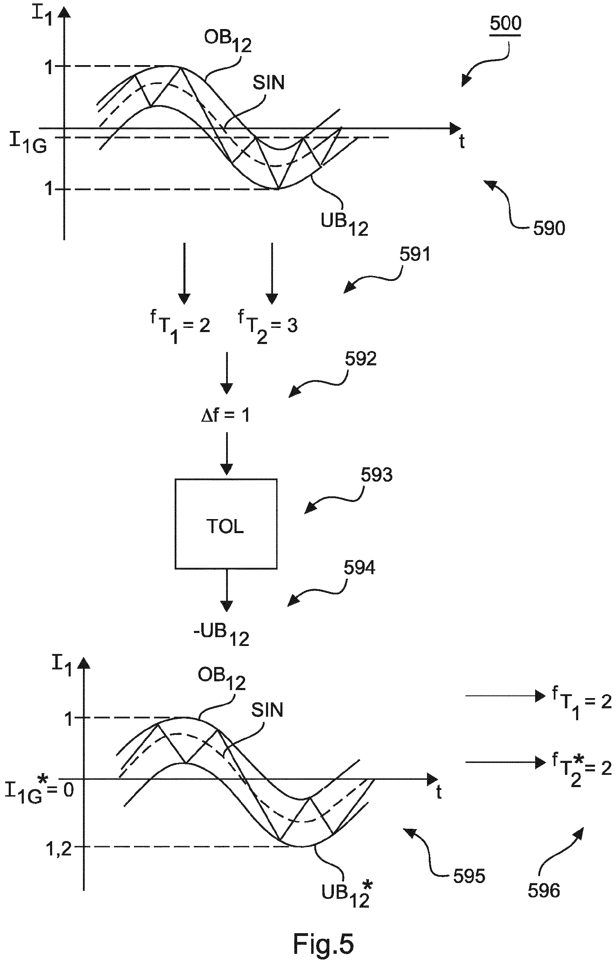

Die Indizes der Bandgrenzen OB12, UB12, OB34, UB34, OB56, UB56 sowie der Schaltfrequenzen f1, f2, f3, f4, f5, f6 beziehen sich jeweils auf die Indizes der Ober- und Unterschalter T1, T2, T3, T4, T5, T6. Details zu den Bandgrenzen und Schaltfrequenzen werden zudem noch beispielhaft für eine erste Phase U in Figur 5 erläutert.

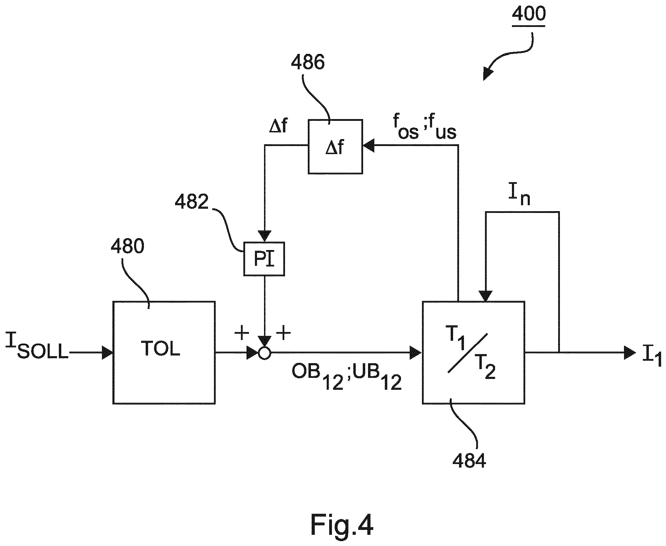

Fig. 4 zeigt die schematische Struktur 400 eines Teils des Verfahrens, insbesondere zum Erzeugen eines einphasigen, eine sinusförmige Grundwelle aufweisenden elektrischen Wechselstroms I1 einer Phase U.

Die Führungsgröße Isoll, also der Stromsollwert für den Wechselrichter, wird auf den Toleranzblock 480 gegeben. Der Toleranzblock 480 ermittelt hieraus die entsprechenden Bandgrenzen OB12, UB12 für den Oberschalter T1 und den Unterschalter T2 der Phase U. Der Oberschalter T1 und der Unterschalter T2, die durch den Block 484 abgebildet sind, erzeugen dann entsprechend der Bandgrenzen OB12, UB12 den einphasigen, eine sinusförmige Grundwelle aufweisende elektrische Wechselstrom I1 der Phase U, wobei die Schalter T1, T2 selbst die Ist-Schaltfrequenzen fos, fus aufweisen bzw. mit diesen betrieben werden.

Die Ist-Schaltfrequenzen fos, fus des Ober- und des Unterschalters T1, T2 werden erfasst und auf einen Frequenzblock 486 gegeben, der aus diesen eine Frequenzdifferenz Δf ermittelt, also die Differenz der Schaltfrequenzen zwischen Oberschalter T1 und Unterschalter T2. Die Frequenzdifferenz Δf selbst wird über einen PI-Regler 482 auf die Bandgrenzen OB12, UB12 zurückgeführt, um die Ist-Schaltfrequenz fos, fus der Schalter T1, T2 entsprechend anzupassen.

Zudem wird der erzeugte, einphasige Wechselstrom I1 mittels einer Stromerfassung ermittelt und auf die Schalter T1, T2 zurückgeführt, um die Schalter bzw. den Wechselrichter in Abhängigkeit des Stromes zu steuern.

Fig. 5 veranschaulicht einen Verfahrensablauf 500 zum Verändern einer Bandgrenze zum Verringern eines Gleichanteils einer Phase gemäß einer Ausführungsform.

Der Ober- und der Unterschalter T1, T2 werden mittels eines Toleranzbandverfahrens 590 angesteuert und arbeiten innerhalb der Bandgrenzen OB12, UB12, die um einen optimalen Sinus sin herum verlaufen. Der Oberschalter T1 arbeitet mit einer ersten Schaltfrequenz fT1 und der Unterschalter T2 mit einer zweiten Schalterfrequenz fT2. Hierdurch stellt sich ein Stromgleichanteil I1G in der Phase U ein.

Die Schaltfrequenzen fT1, fT2 werden in einem ersten Schritt 591 von einem Controller erfasst und in einem zweiten Schritt 592 miteinander verglichen. Die aus dem Vergleich resultierende Frequenzdifferenz Δf wird genau wie die Schaltfrequenzen f1, f2 auf den Toleranzblock 593 gegeben, der hieraus eine Veränderung einer Bandgrenze so bestimmt, dass der die jeweilige sinusförmige Grundwelle sin überlagerte Signalanteil I1G minimiert wird.

Beispielhaft und stark vereinfacht hat der Toleranzblock 593 zur Minimierung des Gleichanteils I1G eine Verschiebung der unteren Bandgrenze 594 nach unten ermittelt, weil für die Schaltfrequenzen fT1, fT2 die Werte 2 bzw. 3 gemessen wurden und damit eine Frequenzdifferenz Δf von 1 ermittelt wurde. Dies wird an den Ober- und an den Unterschalter T1, T2 übermittelt.

Der Ober- und der Unterschalter T1, T2 arbeiten nun in einem nächsten Schritt 595 innerhalb der Bandgrenzen OB12, UB12*, die um den optimalen Sinus sin, also die sinusförmige Grundwelle, verlaufen.. Die untere Bandgrenze UB12* wurde somit verändert. Der Oberschalter T1 arbeitet weiter mit der Schaltfrequenz fT1 und der Unterschalter mit der neuen Schaltfrequenz fT2*, wobei diese Schaltfrequenzen fT1, fT2* im Wesentlichen gleich sind, in dem vereinfachten Beispiel nämlich beide 2 betragen, sodass sich ein Gleichstromanteil I1G* in der Phase U einstellt, hier als 0 angenommen wird, jedenfalls der deutlich kleiner ist, als der Gleichstromanteil I1G. Durch Verwendung eines PI-Reglers kann die hier beispielhaft modifizierte untere Bandgrenze UB12* ihren modifizierten Wert auch bei vollständiger Ausregelung des Gleichanteils behalten.

In einem nächsten Schritt 596 können diese Schaltfrequenzen fT1, fT2* wieder vom Controller erfasst und dann ggf. weiter optimiert werden.

## Patentansprüche

1. Verfahren zum Erzeugen eines mehrphasigen, eine sinusförmige Grundwelle in jeder Phase (U) aufweisenden elektrischen Wechselstroms (I1) mittels eines mehrphasigen Wechselrichters (240, 340) einer Windenergieanlage (100), wobei der mehrphasige Wechselrichter (240, 340) mittels eines Toleranzbandverfahrens (590) angesteuert wird, das jeweils eine obere Bandgrenze und eine untere Bandgrenze für jede der Phasen (U, V, W) des Wechselrichters (240, 340) aufweist, und wobei der Wechselrichter (240, 340) für jede Phase (U) wenigstens einen Oberschalter (T1, T3, T5) zum Erzeugen einer positiven Sinushalbwelle des Wechselstroms (I1) der Phase (U) und wenigstens einen Unterschalter (T2, T4, T6) zum Erzeugen einer negativen Sinushalbwelle des Wechselstroms (I1) der Phase (U) aufweist, umfassend die Schritte:
- Erzeugen der positiven Sinushalbwelle mittels des Oberschalters (T1, T3, T5) und Erzeugen der negativen Sinushalbwelle mittels des Unterschalters (T2, T4, T6) in Abhängigkeit der Bandgrenzen (OB12, UB12, OB34, UB34, OB56, UB56) zu dem elektrischen Wechselstrom der Phase (U),
- Verändern wenigstens einer der Bandgrenzen (OB12, UB12, OB34, UB34, OB56, UB56) so, dass ein der jeweiligen sinusförmigen Grundwelle überlagerter Signalanteil verringert wird, wobei
- als der überlagerte Signalanteil ein Gleichstromanteil (I1G*) erfasst wird,
wobei das Erfassen des überlagerten Signalanteils durch Erfassen der Schaltfrequenz (f1, f3, f5) des Oberschalters (T1, T3, T5) und Erfassen der Schaltfrequenz (f2, f4, f6) des Unterschalters (T2, T4, T6) über eine Halbwelle einer Grundschwingung und durch einen Vergleich der Schaltfrequenzen (f1, f2, f3, f4, f5, f6) des Oberschalters (T1, T3, T5) und des Unterschalters (T2, T4, T6) erfolgt, wobei
- die obere Bandgrenze oder alternativ die untere Bandgrenze so verändert wird, dass die Differenz der Schaltfrequenz (f1, f2, f3, f4, f5, f6) zwischen Oberschalter (T1, T3, T5) und Unterschalter (T2, T4, T6) minimiert wird,
**dadurch gekennzeichnet, dass**
- die obere Bandgrenze oder alternative die untere Bandgrenze (UB12*) mit einer Zeitkonstanten verändert wird, die ein Vielfaches der Dauer der Grundschwingung des elektrischen Wechselstroms (I1) der betreffenden Phase (U) ist.

2. Verfahren nach Anspruch 1,
**dadurch gekennzeichnet, dass**
- die wenigstens eine Bandgrenze (594) so verändert wird, dass sich wenigstens eine Schaltfrequenz (f1, f3, f5) eines Oberschalters (T1, T3, T5) und/oder eines Unterschalters (T2, T4, T6) verändert.

3. Verfahren nach einem der vorstehenden Ansprüche,
**dadurch gekennzeichnet, dass**
- die obere Bandgrenze oder alternativ die untere Bandgrenze (UB12*) so verändert wird, dass der überlagerte Signalanteil verringert wird, wobei die untere Bandgrenze (UB12*) oder alternativ die obere Bandgrenze unverändert bleibt.

4. Verfahren nach einem der vorstehenden Ansprüche,
**dadurch gekennzeichnet, dass**
- die obere Bandgrenze oder alternativ die untere Bandgrenze (UB12*) so verändert wird, dass die Schaltfrequenz (f1, f3, f5) des Oberschalters (T1, T3, T5) bzw. des Unterschalters (T2, T4, T6) reduziert wird.

5. Verfahren nach einem der vorstehenden Ansprüche,
**dadurch gekennzeichnet, dass**
- zur Bestimmung der Schaltfrequenzen (f1, f2, f3, f4, f5, f6) der Ober- und Unterschalter (T1, T2, T3, T4, T5, T6) über eine Halbwelle einer Grundschwingung die Anzahl von Schalthandlungen über die Halbwelle aufgenommen und durch die Dauer der Halbwelle geteilt wird.

6. Verfahren nach einem der vorstehenden Ansprüche,
**dadurch gekennzeichnet, dass**
- das Verändern der Bandgrenzen (OB12, UB12, OB34, UB34, OB56, UB56) durch Beaufschlagung der Bandgrenzen (OB12, UB12, OB34, UB34, OB56, UB56) mit einem Korrekturwert erfolgt, insbesondere als variabler Korrekturwert besonders mittels eines PI-Reglers (482) in Abhängigkeit eines DC-Offsets.

7. Verfahren nach einem der vorstehenden Ansprüche,
**dadurch gekennzeichnet, dass**
- die Ober- und Unterschalter (T1, T2, T3, T4, T5, T6) jeweils wenigstens einen IGBT aufweisen, um die positive und die negative Sinushalbwelle zu erzeugen.

8. Verfahren nach einem der vorstehenden Ansprüche,
**dadurch gekennzeichnet, dass**
- das Toleranzbandverfahren (590) einen Strom-Sollwert verwendet und der Wechselrichter (240, 340) in Abhängigkeit dieses Strom-Sollwertes gesteuert wird.

9. Verfahren nach einem der vorstehenden Ansprüche,
**dadurch gekennzeichnet, dass**:
- das Verändern der Bandgrenzen (OB12, UB12, OB34, UB34, OB56, UB56) in Abhängigkeit eines bzw. des Strom-Sollwertes erfolgt.

10. Verfahren zum Einspeisen eines elektrischen Stromes in ein elektrisches Versorgungsnetz mit einer Netznennspannung mittels einer an das Versorgungsnetz angeschlossenen Windenergieanlage (100), die wenigstens einen mehrphasigen Wechselrichter (240, 340) aufweist, der als Vollumrichter ausgebildet ist, umfassend die Schritte:
- Einspeisen eines elektrischen Stromes mittels des Vollumrichters, wobei der Vollumrichter ein Verfahren nach einem der Ansprüche 1 bis 9 ausführt.

11. Windenergieanlage (100) mit wenigstens einem mehrphasigen Wechselrichter (240, 340) zum Erzeugen eines mehrphasigen, eine sinusförmige Grundwelle in jeder Phase (U) aufweisenden elektrischen Wechselstroms (I1), wobei der Wechselrichter (240, 340) mittels eines Toleranzbandverfahrens (590) angesteuert wird, das jeweils eine obere Bandgrenze und eine untere Bandgrenze (UB12*) für jede der Phasen (U, V, W) des Wechselrichters (240, 340) aufweist, und wobei der Wechselrichter (240, 340) für jede Phase (U) wenigstens einen Oberschalter (T1, T3, T5) zum Erzeugen einer positiven Sinushalbwelle des Wechselstroms (I1) der Phase (U) und wenigstens einen Unterschalter (T2, T4, T6) zum Erzeugen einer negativen Sinushalbwelle des Wechselstroms (I1) der Phase (U) aufweist, **dadurch gekennzeichnet, dass** der mehrphasige Wechselrichter (240, 340) dazu eingerichtet ist, ein Verfahren nach einem der Ansprüche 1 bis 10 durchzuführen.

12. Windenergieanlage (100) nach Anspruch 11,
**dadurch gekennzeichnet, dass**
- die Ober- und Unterschalter (T1, T2, T3, T4, T5, T6) jeweils wenigstens einen IGBT aufweisen, um die positive und die negative Sinushalbwelle zu erzeugen.

13. Windenergieanlage (100) nach Anspruch 11 oder 12,
**gekennzeichnet durch**
- einen PI-Regler (482), der die Bandgrenzen (OB12, UB12, OB34, UB34, OB56, UB56) mittels eines Korrekturwertes verändert, besonders in Abhängigkeit eines DC-Offsets.

## Claims

1. A method for generating a multiphase electrical alternating current (11) having a sinusoidal fundamental wave in each phase (U) by means of a multiphase inverter (240, 340) of a wind power installation (100), wherein the multiphase inverter (230; 340) is controlled by means of a tolerance band method (590) which respectively has an upper band limit and a lower band limit for each of the phases (U, V, W) of the inverter (240, 340), and wherein the inverter (240, 340) has, for each phase (U), at least one upper switch (T1, T3, T5) for generating a positive sine half-wave of the alternating current (11) of the phase (U) and at least one lower switch (T2, T4, T6) for generating a negative sine half-wave of the alternating current (11) of the phase (U), comprising the steps of:
- generating the positive sine half-wave by means of the upper switch (T1, T3, T5) and generating the negative sine half-wave by means of the lower switch (T2, T4, T6) on the basis of the band limits (OB12, UB12, OB34, UB34, OB56, UB56) for the electrical alternating current of the phase (U),
- changing at least one of the band limits (OB12, UB12, OB34, UB34, OB56, UB56) in such a manner that a signal component superimposed on the respective sinusoidal fundamental wave is reduced, wherein
- a DC component is captured as the superimposed signal component (I1G*), wherein the capture of the superimposed signal component is carried out by capturing the switching frequency (f1, f3, f5) of the upper switch (T1, T3, T5) and capturing the switching frequency (f2, f4, f6) of the lower switch (T2, T4, T6) by comparing the switching frequencies (f1, f2, f3, f4, f5, f6) of the upper switch (T1, T3, T5) and of the lower switch (T2, T4, T6), wherein
- the upper band limit or alternatively the lower band limit is changed in such a manner that the difference in the switching frequency (f1, f2, f3, f4, f5) between the upper switch (T1, T3, T5) and the lower switch (T2, T4, T6) is minimized,
**characterized in that**
- the upper band limit or alternatively the lower band limit (UB12*) is changed with a time constant which is a multiple of the duration of the fundamental oscillation of the electrical alternating current (11) of the relevant phase (U).

2. The method as claimed in claim 1,
**characterized in that**
- the at least one band limit (594) is changed in such a manner that at least one switching frequency (f1, f3, f5) of an upper switch (T1, T3, T5) and/or of a lower switch (T2, T4, T6) is changed.

3. The method as claimed in one the preceding claims,
**characterized in that**
- the upper band limit or alternatively the lower band limit (UB12*) is changed in such a manner that the superimposed signal component is reduced, wherein the lower band limit (UB12*) or alternatively the upper band limit remains unchanged.

4. The method as claimed in one the preceding claims,
**characterized in that**
- the upper band limit or alternatively the lower band limit (UB12*) is changed in such a manner that the switching frequency (f1, f3, f5) of the upper switch (T1, T3, T5) or of the lower switch (T2, T4, T6) is reduced.

5. The method as claimed in one of the preceding claims,
**characterized in that**
- for the determination of the switching frequencies (f1, f2, f3, f4, f5, f6) of the upper and lower switches (T1, T2, T3, T4, T5, T6) are determined over a half-wave of a fundamental oscillation to record the number of switching actions over one half-wave and to divide it by the duration of the half-wave.

6. The method as claimed in one of the preceding claims,
**characterized in that**
- the band limits (OB12, UB12, OB34, UB34, OB56, UB56) are changed by applying a correction value to the band limits (OB12, UB12, OB34, UB34, OB56, UB56), in particular as a variable correction value, in particular by means of a PI controller (482), on the basis of a DC offset.

7. The method as claimed in one of the preceding claims,
**characterized in that**
- the upper and lower switches (T1, T2, T3, T4, T5, T6) each have at least one IGBT for generating the positive and negative sine half-waves.

8. The method as claimed in one of the preceding claims,
**characterized in that**
- the tolerance band method (590) uses a desired current value, and the inverter (240, 340) is controlled on the basis of this desired current value.

9. The method as claimed in one of the preceding claims,
**characterized in that**
- the band limits (OB12, UB12, OB34, UB34, OB56, UB56) are changed on the basis of a or the desired current value.

10. A method for feeding an electrical current into an electrical supply network with a nominal system voltage by means of a wind power installation (100) which is connected to the supply network and has at least one multiphase inverter (240; 340) in the form of a full converter, comprising the steps of:
- feeding in an electrical current by means of the full converter, wherein the full converter carries out a method as claimed in one of claims 1 to 9.

11. A wind power installation (100) having at least one multiphase inverter (240; 340) for generating a multiphase electrical alternating current (11) having a sinusoidal fundamental wave in each phase (U), wherein the inverter (240, 340) is controlled by means of a tolerance band method (590) which respectively has an upper band limit and a lower band limit (UB12*) for each of the phases (U, V, W) of the inverter (240, 340), and wherein the inverter (240, 340) has, for each phase (U), at least one upper switch (T1, T3, T5) for generating a positive sine half-wave of the alternating current (11) of the phase (U) and at least one lower switch (T2, T4, T6) for generating a negative sine half-wave of the alternating current (11) of the phase (U), **characterized in that** the multiphase inverter (240; 340) is set up to carry out a method as claimed in one of claims 1 to 10.

12. The wind power installation (100) as claimed in claim 11,
**characterized in that**
- the upper and lower switches (T1, T2, T3, T4, T5, T6) each have at least one IGBT for generating the positive and negative sine half-waves.

13. The wind power installation (100) as claimed in claim 11 or 12,
**characterized by**
- a PI controller (482) which changes the band limits (OB12, UB12, OB34, UB34, OB56, UB56) by means of a correction value, in particular on the basis of a DC offset.

## Revendications

1. Procédé de production d'un courant alternatif (I1) électrique polyphasé présentant une onde fondamentale sinusoïdale dans chaque phase (U) au moyen d'un onduleur (240, 340) polyphasé d'une éolienne (100), dans lequel l'onduleur (240, 340) polyphasé est piloté au moyen d'un procédé à bande de tolérance (590) qui présente respectivement une limite de fréquence supérieure et une limite de fréquence inférieure pour chacune des phases (U, V, W) de l'onduleur (240, 340), et dans lequel l'onduleur (240, 340) présente pour chaque phase (U) au moins un commutateur supérieur (T1, T3, T5) pour produire une onde demi-sinusoïdale positive du courant alternatif (I1) de la phase (U) et au moins un commutateur inférieur (T2, T4, T6) pour produire une onde demi-sinusoïdale négative du courant alternatif (I1) de la phase (U), comprenant les étapes :
- de production de l'onde demi-sinusoïdale positive au moyen du commutateur supérieur (T1, T3, T5) et de production de l'onde demi-sinusoïdale négative au moyen du commutateur inférieur (T2, T4, T6) en fonction des limites de fréquence (OB12, UB12, OB34, UB34, OB56, UB56) au courant alternatif électrique de la phase (U),
- de modification d'au moins une des limites de fréquence (OB12, UB12, OB34, UB34, OB56, UB56) de sorte qu'une composante de signal superposée à l'onde fondamentale sinusoïdale respective est réduite, dans lequel
- une composante de courant continu (I1G*) est détectée en tant que la composante de signal superposée, dans lequel la détection de la composante de signal superposée est effectuée en détectant la fréquence de commutation (f1, f3, f5) du commutateur supérieur (T1, T3, T5) et en détectant la fréquence de commutation (f2, f4, f6) du commutateur inférieur (T2, T4, T6) sur une demi-onde d'une oscillation fondamentale par une comparaison des fréquences de commutation (f1, f2, f3, f4, f5, f6) du commutateur supérieur (T1, T3, T5) et du commutateur inférieur (T2, T4, T6), dans lequel
- la limite de fréquence supérieure ou en variante la limite de fréquence inférieure est modifiée de telle sorte que la différence de la fréquence de commutation (f1, f2, f3, f4, f5, f6) entre le commutateur supérieur (T1, T3, T5) et le commutateur inférieur (T2, T4, T6) est minimisée,
**caractérisé en ce que**
- la limite de fréquence supérieure ou en variante la limite de fréquence inférieure (UB12*) est modifiée avec une constante temporelle qui est un multiple de la durée de l'oscillation fondamentale du courant alternatif (I1) électrique de la phase concernée (U).

2. Procédé selon la revendication 1,
**caractérisé en ce que**
- l'au moins une limite de fréquence (594) est modifiée de telle sorte qu'au moins une fréquence de commutation (f1, f3, f5) d'un commutateur supérieur (T1, T3, T5) et/ou d'un commutateur inférieur (T2, T4, T6) est modifiée.

3. Procédé selon l'une quelconque des revendications précédentes,
**caractérisé en ce que**
- la limite de fréquence supérieure ou en variante la limite de fréquence inférieure (UB12*) est modifiée de telle sorte que la composante de signal superposée est réduite, dans lequel la limite de fréquence inférieure (UB12*) ou en variante la limite de fréquence supérieure reste inchangée.

4. Procédé selon l'une quelconque des revendications précédentes,
**caractérisé en ce que**
- la limite de fréquence supérieure ou en variante la limite de fréquence inférieure (UB12*) est modifiée de telle sorte que la fréquence de commutation (f1, f3, f5) du commutateur supérieur (T1, T3, T5) ou du commutateur inférieur (T2, T4, T6) est réduite.

5. Procédé selon l'une quelconque des revendications précédentes,
**caractérisé en ce que**
- pour définir les fréquences de commutation (f1, f2, f3, f4, f5, f6) des commutateurs supérieur et inférieur (T1, T2, T3, T4, T5, T6) sur une demi-onde d'une oscillation fondamentale, le nombre de manipulations de commutation sur la demi-onde est relevé et est divisé par la durée de la demi-onde.

6. Procédé selon l'une quelconque des revendications précédentes,
**caractérisé en ce que**
- la modification des limites de fréquence (OB12, UB12, OB34, UB34, OB56, UB56) est effectuée en soumettant les limites de fréquence (OB12, UB12, OB34, UB34, OB56, UB56) à l'action d'une valeur de correction, en particulier en tant que valeur de correction variable notamment au moyen d'un régulateur proportionnel et intégral (482) en fonction d'un décalage en courant continu.

7. Procédé selon l'une quelconque des revendications précédentes,
**caractérisé en ce que**
- les commutateurs supérieur et inférieur (T1, T2, T3, T4, T5, T6) présentent respectivement au moins un transistor bipolaire à grille isolée (IGBT, Insulated Gate Bipolar Transistor) pour produire l'onde demi-sinusoïdale positive et l'onde demi-sinusoïdale négative.

8. Procédé selon l'une quelconque des revendications précédentes,
**caractérisé en ce que**
- le procédé à bande de tolérance (590) utilise une valeur théorique de courant et l'onduleur (240, 340) est commandé en fonction de ladite valeur théorique de courant.

9. Procédé selon l'une quelconque des revendications précédentes,
**caractérisé en ce que** :
- la modification des limites de fréquence (OB12, UB12, OB34, UB34, OB56, UB56) est effectuée en fonction d'une ou de la valeur théorique de courant.

10. Procédé d'injection d'un courant électrique dans un réseau d'alimentation électrique avec une tension nominale de réseau au moyen d'une éolienne (100) raccordée au réseau d'alimentation, qui présente au moins un onduleur (240, 340) polyphasé, qui est réalisé en tant que convertisseur, comprenant les étapes :
- d'injection d'un courant électrique au moyen du convertisseur, dans lequel le convertisseur exécute un procédé selon l'une quelconque des revendications 1 à 9.

11. Eolienne (100) avec au moins un onduleur (240, 340) polyphasé pour produire un courant alternatif (I1) électrique polyphasé présentant une onde fondamentale sinusoïdale dans chaque phase (U), dans laquelle l'onduleur (240, 340) est piloté au moyen d'un procédé à bande de tolérance (590), qui présente respectivement une limite de fréquence supérieure et une limite de fréquence inférieure (UB12*) pour chacune des phases (U, V, W) de l'onduleur (240, 340), et dans laquelle l'onduleur (240, 340) présente pour chaque phase (U) au moins un commutateur supérieur (T1, T3, T5) pour produire une onde demi-sinusoïdale positive du courant alternatif (I1) de la phase (U) et au moins un commutateur inférieur (T2, T4, T6) pour produire une onde demi-sinusoïdale négative du courant alternatif (I1) de la phase (U), **caractérisée en ce que** l'onduleur (240, 340) polyphasé est mis au point pour mettre en œuvre un procédé selon l'une quelconque des revendications 1 à 10.

12. Eolienne (100) selon la revendication 11, **caractérisée en ce que**
- les commutateurs supérieur et inférieur (T1, T2, T3, T4, T5, T6) présentent respectivement au moins un IGBT pour produire l'onde demi-sinusoïdale positive et l'onde demi-sinusoïdale négative.

13. Eolienne (100) selon la revendication 11 ou 12, **caractérisée par**
- un régulateur proportionnel et intégral (482), qui modifie les limites de fréquence (OB12, UB12, OB34, UB34, OB56, UB56) au moyen d'une valeur de correction, en particulier en fonction d'un décalage en courant continu.
